(19) Europäisches Patentamt
European Patent Office
Office européen des brevets

(11) Veröffentlichungsnummer: **0 282 869**
**B1**

(12) **EUROPÄISCHE PATENTSCHRIFT**

(45) Veröffentlichungstag der Patentschrift: **29.08.90**

(51) Int. Cl.⁵: **C02F 1/58,** C01C 1/10

(21) Anmeldenummer: **88103534.9**

(22) Anmeldetag: **07.03.88**

(54) **Verfahren und Anordnung zur Entfernung von Ammoniumionen sowie Chlorkohlenwasserstoffen und/oder Kohlenwasserstoffen aus Abwässern.**

(30) Priorität: **18.03.87 DE 3708823**

(43) Veröffentlichungstag der Anmeldung:
**21.09.88 Patentblatt 88/38**

(45) Bekanntmachung des Hinweises auf die Patenterteilung:
**29.08.90 Patentblatt 90/35**

(84) Benannte Vertragsstaaten:
**BE CH DE GB IT LI NL SE**

(56) Entgegenhaltungen:
**EP-A- 0 029 536**
**DE-A- 2 530 537**
**US-A- 3 898 058**

(73) Patentinhaber: **Siemens Aktiengesellschaft, Wittelsbacherplatz 2, D-8000 München 2(DE)**

(72) Erfinder: **Gabriel, Christian, Dipl.-Ing., Flurstrasse 6, D-8521 Möhrendorf(DE)**

**EP 0 282 869 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Verfahren zur Entfernung von Ammoniumionen sowie Chlorkohlenwasserstoffen und/oder Kohlenwasserstoffen aus Abwässern, bei dem dem ammoniumionenhaltigen Abwasser eine Lauge entsprechend dem Gehalt an Ammoniumionen zudosiert wird und das sich bildende Ammoniak mit einem Spülgas abgezogen und mit Säure in Ammoniumsalze umgewandelt wird.

In Gewerbe- und Industriebetrieben fallen häufig Abwässer an, die eine relativ hohe Konzentration von Ammoniumionen aufweisen. Da die Grenzwerte für Ammoniumionen in Abwässern, welche in öffentliche Gewässer abgeleitet werden sollen, zur Erhaltung der Fischbestände sehr niedrig angesetzt sind, ist es erforderlich, den Gehalt an Ammoniumionen in solchen Abwässern zum Teil um mehrere Zehnerpotenzen zu verringern.

Es ist bekannt, Ammoniumionen aus Wasser dadurch zu entfernen, daß man dem Wasser Laugen - insbesondere Natronlauge - zuführt, wobei sich dann das Annion der Lauge mit den Kationen im Wasser verbindet und Ammoniak freigegeben wird. Diese Reaktion, die sich durch Aufwärmen des Abwassers stark beschleunigen läßt, läuft nach der folgenden Gleichung ab:

$$NH_4^+ + CL^- + NaOH \leftrightarrow NaCl + NH^+ + OH^- \rightarrow NH_3^{\uparrow} + H_2O + NaCl$$

Sie ist wegen der Giftigkeit des dabei freiwerdenden Ammoniaks und der damit verbundenen starken Geruchsbelästigung nicht zur Entfernung von Ammoniumionen aus Abwässern angewendet worden.

Durch die FR-A 2 260 532 ist bereits ein Verfahren zur Entfernung von Ammoniumionen aus Abwässern bekannt geworden, bei dem man das frei werdende $NH_3$ mit Hilfe einer Luftströmung, die in einem geschlossenen Kreislauf geführt wird, mitnimmt und dieses mit Ammoniak beladene Kreislaufgas durch Zugabe einer Säure in Ammoniumsalze umwandelt und diese aus dem Kreislauf entfernt.

Ein noch weiter entwickeltes Verfahren zur Entfernung von Ammoniumionen aus Abwässern ist aus der EP-A1 0 029 536 bekannt. Dort wird den ammoniumhaltigen Abwässern Natronlauge zugegeben und wird das frei werdende $NH_3$ in einer Strippkolonne mittels eines inerten Gases wie beispielsweise $N_2$ bei 70 bis 185° F mitgerissen und in einer weiteren Absorptionskolonne mit einer sauren Lösung, vorzugsweise Schwefelsäure, kontaktiert, wobei das $NH_3$ in Ammoniumsulfat umgewandelt wird und das weitestgehend von $NH_3$ befreite inerte Gas in die erste Strippkolonne rezirkuliert. Die mit Ammoniumsulfat angereicherte Schwefelsäure wird rezirkuliert. Dabei wird ständig eine gewisse Teilmenge der mit Ammoniumsulfat angereicherten Schwefelsäure abgezogen und durch frische Schwefelsäure ersetzt. Dabei wird die Temperatur in der Absorptionskolonne so eingestellt, daß die Wasserdampfkonzentration in dem die Absorptionskolonne verlassenden inerten Gas gleich oder höher ist als die Wasserdampfkonzentrationen in der Strippkolonne, wodurch die Effektivität des Verfahrens verbessert wird.

Durch die US-Patentschriften 3 331 189 und 4 135 891 ist es bereits bekannt, Kohlenstoffe aus Gasgemischen mittels Aktivkohle zu entfernen. Dabei kann die mit Kohlenstoffen aufgeladene Aktivkohle mit Wasserdampf regeneriert werden. Hierzu werden zwei Absorberkolonnen nebeneinander verwendet, von denen die eine jeweils absorbiert, während die andere gerade mit Wasserdampf regeneriert wird und umgekehrt.

Der Erfindung liegt die Aufgabe zugrunde, einen Weg zu weisen, wie aus Abwässern, die mit Ammoniumionen, Chlorkohlenwasserstoffen und/oder Kohlenwasserstoffen beladen sind, diese Schadstoffe entfernt werden können, ohne daß dadurch andere schwerwiegende Umweltbelastungen in Kauf genommen werden müssen.

Die Aufgabe wird durch die Merkmale des Anspruchs 1 gelöst, weitere vorteilhafte Ausgestaltungen des Verfahrens sowie die zugehörigen Anordnungen zur Durchführung des Verfahrens sind den Ansprüchen 2 bis 10 zu entnehmen.

Durch die Einleitung einer Lauge in das mit Ammoniumionen beladene Abwasser wird die bereits eingangs geschilderte Reaktion eingeleitet, durch die die Kationen des Abwassers durch die Kationen der Lauge unter Bildung des entsprechenden Salzes verdrängt werden und das Ammonium in Form von Ammoniak frei wird, das nun mit einem Spülgas aus der Reaktionszone entfernt werden kann. Bei der dann anschließenden Kontaktierung dieses Ammoniaks mit einer Säure wird das der Säure entsprechende Ammonsalz gebildet, so daß kein Ammoniak an die Atmosphäre abgegeben wird. Das entstandene Ammonsalz kann dann an die chemische Industrie weiter verkauft werden. Wird nun das Spülgas mit Aktivkohle und/oder porösem Ton kontaktiert, so können darin die ebenfalls vom Spülgas mitgenommenen Chlorkohlenwasserstoffe und/oder Kohlenwasserstoffe zurückgehalten werden, so daß das hiervon befreite Spülgas erneut verwendet werden kann.

Weitere Einzelheiten der Erfindung werden anhand zweier in den Fig. dargestellter Ausführungsbeispiele erläutert. Es zeigen:

die Fig. 1 eine schematische Darstellung einer Anlage zur Entfernung von Ammoniumionen aus Abwässern gemäß dem Stand der Technik und

die Fig. 2 eine schematische Darstellung einer erfindungsgemäßen Anlage, mit der man zusätzlich auch noch Chlorkohlenwasserstoffe und Kohlenwasserstoffe aus dem Abwasser entfernen kann.

In der Fig. 1 ist mit 1 eine Zulaufleitung für das mit Ammoniumionen beladene Abwasser bezeichnet. Diese Zulaufleitung 1 enthält eine Abwasserpumpe 2 und führt zu einer ersten Strippkolonne 3, die im Ausführungsbeispiel eine Füllkörperkolonne ist. In der Zulaufleitung 1 mündet eine Leitung 4, die mit einem Vorratsbehälter 5 für Natronlauge verbunden ist und eine Dosierpumpe 6 enthält. Hinter der Zusammenführung ist eine Mischkammer 7 in der Zulaufleitung 1 eingebaut. Die Zulaufleitung 1 für das Abwasser mündet im Kopf der ersten Strippkolonne 3 in einer Aufgabevorrichtung 8, die das Abwasser gleichmäßig über den Füllkörpereinsatz 9 der Strippkolonne 3 verteilt. Am unteren Ende der ersten Strippkolonne 3 erkennt man die Ablaufleitung 10 für das von Ammoniumionen befreite, jedoch salzbeladene Abwasser. In dieser Ablaufleitung 10 befindet sich ein Regelventil 11, das über einen Füllstandsmeßfühler 12 in Abhängigkeit vom Flüssigkeitsstand am unteren Ende der Strippkolonne 3 gesteuert 3 wird. Am unteren Ende der Strippkolonne 3 mündet oberhalb der Ablaufleitung 10 eine Spülgasleitung 13, durch die im Ausführungsbeispiel Luft über ein Gebläse 14 in diese erste Strippkolonne 3 gedrückt wird.

Am Kopf der ersten Strippkolonne 3 ist eine Gasabzugsleitung 15 angeschlossen, die zum unteren Ende einer zweiten Strippkolonne 16 führt. Am Kopf dieser zweiten Strippkolonne ist ebenfalls eine Gasabzugsleitung 13 angeschlossen, die mit der am unteren Ende der ersten Strippkolonne 3 mündenden Spülgasleitung identisch ist. Am Kopf der zweiten Strippkolonne 16 mündet außerdem eine mit einer Aufgabevorrichtung 17 für den Füllkörpereinsatz 18 und einem Zulaufventil 19 versehene Zuführungsleitung 20 für Säure. Am unteren Ende der zweiten Strippkolonne ist eine Ablaufleitung 21 für das Säure-Ammonsalzgemisch angeschlossen. Diese Ablaufleitung 21, in der eine Förderpumpe 22 geschaltet ist, mündet in der Zuführungsleitung 20 für die Säure zwischen dem Zulaufventil 19 und der Aufgabevorrichtung 17. Sie hat eine ventilgesteuerte Abzugsleitung 23. Das Ventil 24 wird über einen Füllstandsmeßfühler 25 in Abhängigkeit vom Flüssigkeitsstand am unteren Ende der zweiten Strippkolonne 16 gesteuert.

Beim Betrieb dieser in der Fig. 1 dargestellten Anlage zur Entfernung von Ammoniumionen aus Abwässern wird das mit Ammoniumionen beladene Abwasser über die Abwasserpumpe 2 in die Mischkammer 7 und über die Mischkammer und die Aufgabevorrichtung 8 in die erste Strippkolonne 3 gepumpt. Dem zulaufenden Abwasser wird über die Dosierpumpe 6 in Abhängigkeit vom Ammongehalt des Abwassers aus einem Vorratsbehälter 5 Natronlauge zugemischt. Die Natronlauge vermischt sich in der Mischkammer 7 gleichmäßig mit dem Abwasser und wird dann mitsamt dem Abwasser über die Aufgabevorrichtung 8 auf den Füllkörpereinsatz 9 der ersten Strippkolonne 3 verteilt. Durch diesen Füllkörpereinsatz 9 wird von unten über das Gebläse 14 Luft im Gegenstrom zu dem Abwasser-Laugengemisch durchgeblasen. Das sich bei den in der Beschreibungseinleitung angegebenen Reaktionen bildende Natriumsalz bleibt in Lösung und wird mit dem Abwasser über die Ablaufleitung 10 aus der ersten Strippkolonne 3 herausgeführt. Das sich gleichzeitig bildende Ammoniak wird vom Spülgas, im vorliegenden Fall von der Luft, mitgerissen und über die Gasabzugsleitung 15 in das untere Ende der zweiten Strippkolonne 16 gedrückt. Dort strömt es durch den Füllkörpereinsatz 18 nach oben. Diesem ammoniakhaltigen Spülgas strömt die am Kopf der Strippkolonne 16 über die Aufgabevorrichtung 17 auf den Füllkörpereinsatz 18 verteilte Säure, im vorliegenden Fall Schwefelsäure, entgegen. Hierbei läuft die nachfolgende Reaktion ab:

$$2\ NH_3 + H_2O + H_2SO_4 \rightarrow (NH_4)_2SO_4 + H_2O$$

Bei dieser Reaktion wird das sich bildende Ammonsulfat mit der überschüssigen Schwefelsäure mitgenommen und fließt nach unten aus dem Füllkörpereinsatz 18 heraus, wohingegen das vom Ammoniak befreite Spülgas, im vorliegenden Fall die Luft, diese zweite Strippkolonne 16 am Kopf über die Gasabzugsleitung 13 verläßt und über das Gebläse 14 wiederum in die erste Strippkolonne 3 zurückgedrückt wird. Das unten aus der Ablaufleitung 21 der zweiten Strippkolonne 16 über eine Förderpumpe 22 abgezogene Schwefelsäure-Ammonsulfatgemisch wird von der Förderpumpe 22 über die Zuführungsleitung 20 und die Aufgabevorrichtung 17 auf den Füllkörpereinsatz 18 der zweiten Strippkolonne 16 zurückgegeben. Überschüssiges Ammonsulfat-Schwefelsäuregemisch wird je nach Füllstand am unteren Ende der zweiten Strippkolonne 16 über das vom Füllstandsmeßfühler 25 gesteuerte Ventil 24 abgegeben. Ebenso wird von Zeit zu Zeit frische Schwefelsäure über das Zulaufventil 19 ergänzt.

Im Endergebnis wird der Ammongehalt des Abwassers in ein Natriumsalz umgewandelt, für das in den öffentlichen Gewässern höhere Toleranzgrenzen bestehen als für mit Ammoniumionen beladenes Abwasser. Dabei wird etwas Natronlauge und etwas Schwefelsäure verbraucht und wird separat schwefelsäurehaltiges Ammonsalz zur Verfügung gestellt. Dieses schwefelsäurehaltige Ammonsalz kann als Rohstoff der chemischen Industrie verkauft werden. Sollte in speziellen Fällen statt Ammonsulfat Ammonchlorid erwünscht sein, so könnte die Schwefelsäure auch gegen Salzsäure ausgetauscht werden. Das Spülgas selbst wird nicht verbraucht, sondern rezirkuliert. Es werden keine gasförmigen Stoffe an die Umgebung abgegeben.

Die Fig. 2 zeigt eine gegenüber der Fig. 1 um eine dritte Strippkolonne 28 ergänzte Anlage 29 zur Entfernung von Ammoniumionen aus Abwässern, welche nicht nur zur Entfernung von Ammoniumionen, sondern darüber hinaus auch zur Entfernung von Chlorkohlenwasserstoffen und/oder Kohlenwasserstoffen geeignet ist. Genau wie bei der Anlage gemäß Fig. 1 ist auch hier wiederum die Zulaufleitung 30 für das Abwasser mit einer Abwasserpumpe 31, einer Anschlußleitung 32 für Lauge mit einer Dosierpumpe 33 und einem Vorratsbehälter 34 für die Lauge und einer Mischkammer 35 versehen und an den Kopf der ersten Strippkolonne 36 angeschlossen. Am unteren Ende dieser ersten Strippkolonne 36 ist wiederum eine von einem Füllstandsmeßfühler 56 gesteuerten Ventil 57 verschlossene Ablaufleitung 58 für das Abwasser angeschlossen und mündet eine mit einem Gebläse 37 ausgestaltete Spülgasleitung 38. Am Kopf dieser ersten Strippkolonne 36 ist eine Spülgasabzugsleitung 39 angeschlossen, die am unteren Ende einer zweiten Strippkolonne 40 mündet. Diese zweite Strippkolonne 40 ist genau wie beim Ausführungsbeispiel der Fig. 1 am Kopf mit einer Zuführungsleitung 41 für Säure und am unteren Ende mit einer mit einer Förderpumpe 42 versehenen Ablaufleitung 43 ausgerüstet, die ihrerseits außerdem an die Zuführungsleitung 41 für die Säure angeschlossen ist. Auch hier ist an der Ablaufleitung 43 eine von einem Füllstandsmeßfühler 59 gesteuerten Ventil 60 verschlossene Abzugsleitung 61 für das überschüssige Ammonsalz angeschlossen. Abweichend vom Ausführungsbeispiel der Fig. 1 ist jedoch die am Kopf der zweiten Strippkolonne 40 angeschlossene Gasabzugsleitung 44 nicht an die erste Strippkolonne 36, sondern am unteren Ende einer dritten Strippkolonne 28 angeschlossen und erst die am Kopf dieser dritten Strippkolonne 28 angeschlossene Spülgasabzugsleitung 38 ist wieder am unteren Ende der ersten Strippkolonne 36 angeschlossen. Diese dritte Strippkolonne 28 ist am Kopf mit einer Aufgabevorrichtung 45 für eine wässrige Aufschlämmung von porösem Ton und/oder Aktivkohle versehen und am unteren Ende mit einer Abzugsleitung 46 für diese Aufschlämmung. Diese Abzugsleitung 46 mündet im Ausführungsbeispiel in einen trichterförmigen Auffangbehälter 47, an dessen Ablauf eine Umwälzpume 48 angeschlossen ist, die die Aufschlämmung in die Aufgabevorrichtung 45 zurückpumpt. Außerdem mündet in diesen Auffangbehälter 47 eine Eingabeleitung für frische Aufschlämmung 49. Die Abzugsleitung 46 enthält außerdem ein von einem Füllstandsmeßfühler 50 gesteuertes Ventil 51 sowie einen Ablauf 52 für verbrauchte Aufschlämmung.

Beim Betrieb dieser erweiteren Anlage zur Entfernung von Ammoniumionen aus Abwässern wird das mit Ammoniumionen und Chlorkohlenwasserstoffen oder Kohlenwasserstoffen beladene Abwasser ähnlich wie beim Ausführungsbeispiel der Fig. 1 über die Abwasserpumpe 31 in eine Mischkammer 35 gepumpt, nachdem ihm über die Dosierpumpe 33 eine dem Ammoniumgehalt entsprechende Menge an Natronlauge aus dem Laugenvorratsbehälter 34 mittels der Dosierpumpe 33 zugemischt wurde. Das Abwasser-Natronlaugegemisch wird von oben auf den Füllkörpereinsatz 53 der ersten Strippkolonne 36 aufgegeben und durchströmt den Füllkörpereinsatz im Gegenstrom zu dem Spülgas, das im Ausführungsbeispiel wiederum Luft ist, die erste Strippkolonne 36. Dieses Spülgas wird von dem Gebläse 37 über die Spülgasleitung 38 von unten durch die Füllkörpereinlage 53 der Strippkolonne 36 gedrückt. Durch diese Luft werden bei hinreichender Temperatur nicht nur das sich bildende Ammoniak, sondern auch die Chlorkohlenwasserstoffe und die Kohlenwasserstoffe aus dem über die Füllkörpereinsatz 53 fließenden Abwasser ausgespült und mit dem Spülgas über die Gasabzugsleitung 39 fortgetragen. Das mit Ammoniak und Chlorkohlenwasserstoffen und/oder Kohlenwasserstoffen beladene Spülgas strömt - ähnlich wie beim Ausführungsbeispiel der Fig. 1 - von unten durch die Füllkörpereinlage 54 der zweiten Strippkolonne 40 im Gegenstrom zu der auf den Füllkörpereinsatz 54 aufgegebenen oben aufgegebenen Säure. Dabei wird wiederum das mitgetragene Ammoniak in das Ammonsalz der Säure, d.h., im Falle von Schwefelsäure in Ammonsulfat, im Falle von Salzsäure in Ammonchlorid umgewandelt, so wie das im einzelnen bereits anhand des Ausführungsbeispiels der Fig. 1 beschrieben wurde.

Das so vom Ammoniak, nicht jedoch von den Chlorkohlenwasserstoffen und Kohlenwasserstoffen befreite Spülgas strömt nunmehr abweichend vom Ausführungsbeispiel der Fig. 1 über die Gasabzugsleitung 44 zum unteren Ende der dritten Strippkolonne 28. In dieser Strippkolonne 28 wird durch die Aufgabevorrichtung 45 eine wässrige Aufschlämmung von porösem Ton und/oder Aktivkohle auf die Füllkörpereinlage 55 aufgegeben. Dieser Aufschlämmung strömt das Spülgas entgegen. Dabei werden die Chlorkohlenwasserstoffe und die Kohlenwasserstoffe von der Aktivkohle und den porösen Tonpartikeln adsorbiert und mitgenommen, während das von den Chlorkohlenwasserstoffen und Kohlenwasserstoffen befreite Spülgas vom Gebläse 37 vom Kopf der dritten Strippkolonne 28 abgesaugt in das untere Ende der ersten Strippkolonne 36 gedrückt wird. Die sich am Boden der dritten Strippkolonne 28 ansammelnde Aufschlämmung fließt von da über die Abzugsleitung 46 in den Auffangbehälter 47. Von dort wird die Aufschlämmung von der Umwälzpumpe 48 abgesaugt und in die Aufgabevorrichtung 45 zurückgepumpt. Durch fortlaufende Zuführung von frischer Aufschlämmung von Tonerde und/oder Aktivkohle über die Eingabeleitung 49 und Abzug entsprechender Mengen verbrauchter Aufschlämmung durch den Ablauf 42 wird das Adsorptionsvermögen der Aufschlämmung konstant gehalten. Dabei werden die zu- bzw. abgezogenen Mengen über den Füllstandsmeßfühler 50 gesteuert.

Als Spülgas ließen sich außer Luft auch Stickstoff oder Kohlendioxid verwenden. Statt Natronlauge könnte auch eine andere Lauge, wie z.B. Kalilauge, zum Einsatz kommen. Letzteres hätte zur Folge, daß das Abwasser statt mit NaCl mit KCl belastet würde.

**Patentansprüche**

1. Verfahren zur Entfernung von Ammoniumionen sowie Chlorkohlenwasserstoffen und/oder Kohlenwasserstoffen aus Abwässern, bei dem dem ammoniumionenhaltigen Abwasser eine Lauge entsprechend dem Gehalt an Ammoniumionen zudosiert wird und das sich bildende Ammoniak mit einem Spülgas abgezogen und mit Säure in Ammoniumsalze umgewandelt wird, dadurch gekennzeichnet, daß das Spülgas zur zusätzlichen Entfernung von Chlorkohlenwasserstoffen und/oder Kohlenwasserstoffen mit Aktivkohle und/oder porösem Ton kontaktiert wird.

2. Verfahren nach Anspruch 2, dadurch gekennzeichnet, daß als Spülgas Luft verwendet wird.

3. Anordnung zur Entfernung von Ammoniumionen aus Abwässern nach Anspruch 1, mit einer Serienschaltung mindestens zweier Strippkolonnen (3, 16, 36, 40) derart, daß die Gasabzugsleitungen (13, 15, 39, 44) am Kopf der beiden Strippkolonnen mit den unteren Enden der jeweils anderen Strippkolonne verbunden sind, wobei am Kopf der ersten Strippkolonne (3, 36) außerdem die Zuleitung (1, 30) für das mit Ammoniumionen beladene Abwasser und

die Lauge und am unteren Ende dieser ersten Strippkolonne (3, 36) die Abzugsleitung (10, 52) für das salzbeladene Abwasser angeschlossen sind und am Kopf der zweiten Strippkolonne (16,40) außerdem die Zuleitung (20, 41) für die Säure und am unteren Ende der zweiten Strippkolonne (16,40) die Abzugsleitung (23, 43) für die Überschußsäure mit den Ammonsalzen angeschlossen sind, dadurch gekennzeichnet, daß an der Gasabzugsleitung (44) der zweiten Strippkolonne (40) eine dritte Strippkolonne (28) angeschlossen ist, die mit ihrer am Kopf abgehenden Gasabzugsleitung (38) am unteren Ende der ersten Strippkolonne (36) angeschlossen ist und außerdem am Kopf eine Zuführung (45) für eine wässrige Aktivkohle- und/oder poröser Tonschlammsuspension und am unteren Ende eine Abzugsleitung (46) für diese Suspension trägt.

4. Anordnung nach Anspruch 3, dadurch gekennzeichnet, daß die am unteren Ende der dritten Strippkolonne (28) abgezogene Suspension zum größten Teil in den Kopf derselben Kolonne zurückgepumpt und nur zu einem geringen Teil verworfen und durch frische Suspension ersetzt wird.

5. Anordnung nach Anspruch 3, dadurch gekennzeichnet, daß ein Gebläse (14, 37) in der zur ersten Strippkolonne (3, 36) führenden Zuleitung für das Spülgas eingebaut ist.

6. Anordnung nach Anspruch 3, dadurch gekennzeichnet, daß die dritte Strippkolonne eine Füllkörperkolonne ist.

7. Anordnung nach Anspruch 3, dadurch gekennzeichnet, daß die ersten beiden Kolonnen Glockenbödenkolonnen sind.

8. Anordnung nach Anspruch 3, dadurch gekennzeichnet, daß alle Kolonnen (3, 16, 28, 36, 40) Füllkörperkolonnen sind.

9. Anordnung nach Anspruch 3, dadurch gekennzeichnet, daß das am unteren Ende der zweiten Strippkolonne (16, 40) abgezogene Ammoniumsalz-Säuregemisch zum größten Teil in den Kopf derselben Kolonne zurückgepumpt und nur zu einem kleinen Teil ausgetragen und durch frische Säure substituiert wird.

10. Anordnung nach Anspruch 9, dadurch gekennzeichnet, daß in der Zulaufleitung (1, 30) für das mit Ammoniumionen beladene Abwasser eine mit einer Dosierpumpe (6, 33) versehene Laugenzuführleitung (4, 32) mündet und eine Mischkammer (7, 35) eingebaut ist.

11. Anordnung nach Anspruch 10, dadurch gekennzeichnet, daß die am unteren Ende der dritten Strippkolonne (28) abgezogene Suspension zum größten Teil in den Kopf derselben Kolonne zurückgepumpt und nur zu einem geringen Teil verworfen und durch frische Suspension ersetzt wird.

12. Anordnung nach Anspruch 8 oder 10, dadurch gekennzeichnet, daß ein Gebläse (14, 37) in der zur ersten Strippkolonne (3, 36) führenden Zuleitung für das Spülgas eingebaut ist.

13. Anordnung nach Anspruch 8, dadurch gekennzeichnet, daß in der Zulaufleitung (1, 30) für das mit Ammoniumionen beladene Abwasser eine mit einer Dosierpumpe (6, 33) versehene Laugenzuführleitung (4, 32) mündet und eine Mischkammer (7, 35) eingebaut ist.

14. Anordnung nach Anspruch 8, dadurch gekennzeichnet, daß die ersten beiden Kolonnen Glockenbödenkolonnen sind.

15. Anordnung nach Anspruch 10, dadurch gekennzeichnet, daß die dritte Strippkolonne eine Füllkörperkolonne ist.

16. Anordnung nach Anspruch 8 oder 10, dadurch gekennzeichnet, daß alle Kolonnen (3, 16, 28, 36, 40) Füllkörperkolonnen sind.

## Claims

1. Method for removing ammonium ions and chlorinated hydrocarbons and/or hydrocarbons from effluents, which comprises metering a lye into an ammoniumcontaining effluent in accordance with the content of ammonium ions, extracting ammonia that forms with a sweep gas and converting it into ammonium salts with acid, characterised in that the sweep gas is contacted with activated charcoal and/or porous clay for the additional removal of chlorinated hydrocarbons and hydrocarbons.

2. Method according to claim 1, characterised in that air is used as the sweep gas.

3. Apparatus for the removal of ammonium ions from effluents according to claim 1, comprising a series circuit of at least two stripping columns (3, 16, 36, 40) such that the gas extraction lines (13, 15, 39, 44) at the top of the two stripping columns are connected to the lower ends of the respective other stripping columns, wherein an inlet line (1, 30) for the effluent laden with ammonium ions and lye is connected to the top of the first stripping column (3, 36) and the extraction line (10, 52) for the salt-laden effluent is connected to the lower end of the first stripping column (3, 36), and in addition the inlet line (20, 41) for the acid is connected to the top of the second stripping column (16, 40) and the extraction line (23, 43) for excess acid and ammonium salts is connected to the lower end of the second stripping column (16, 40), characterised in that connected to the gas extraction line (44) of the second stripping column (40) there is a third stripping column (28) which is connected by the gas extraction line (38) proceeding from its top to the lower end of the first stripping column (36) and which also carries at its top a supply line (45) for an aqueous suspension of activated charcoal and/or porous clay and an extraction line (46) for this suspension at its lower end.

4. Apparatus according to claim 3, characterised in that most of the suspension extracted at the lower end of the third stripping column (28) is pumped back into the top of said third stripping column, only a small proportion of the suspension being discarded and replaced with fresh suspension.

5. Apparatus according to claim 3, characterised in that a blower (14, 37) is included in the extraction line for sweep gas leading to said first stripping column (3, 36).

6. Apparatus according to claim 3, characterised in that the third stripping column is a packed column.

7. Apparatus according to claim 3, characterised in that the first and second stripping columns are bubble tray columns.

8. Apparatus according to claim 3, characterised in that all of said stripping columns (3, 16, 28, 36, 40) are packed columns.

9. Apparatus according to claim 3, characterised in that the major part of the ammonium salt-acid mixture extracted at said lower end of said second stripping column is pumped back to said top of said second stripping column (16, 40), and only a small proportion of the mixture is removed and replaced with fresh acid.

10. Apparatus according to claim 9, characterised in that a lye supply line (4, 32) provided with a metering pump (6, 33) discharges into the inlet line (1, 30) for the effluent laden with ammonium ions, and a mixing chamber (7, 35) is fitted therein.

11. Apparatus according to claim 10, characterised in that the major part of the suspension extracted at the lower end of the third stripping column (28) is pumped back into the top of said column and only a small proportion of the suspension is discharged and replaced with fresh suspension.

12. Apparatus according to claim 8 or claim 10, characterised in that a blower (14, 37) is included in the inlet line for sweep gas leading to the first stripping column (3, 36).

13. Apparatus according to claim 8, characterised in that a lye supply line (4, 32) provided with a metering pump (6, 33) discharges into the inlet line (1, 30) for the effluent laden with ammonium ions, and a mixing chamber (7, 35) is fitted therein.

14. Apparatus according to claim 8, characterised in that the first two columns are bubble tray columns.

15. Apparatus according to claim 10, characterised in that the third stripping column is a packed column.

16. Apparatus according to claim 8 or claim 10, characterised in that all the columns (3, 16, 28, 36, 40) are packed columns.

## Revendications

1. Procédé pour éliminer des ions amnonium ainsi que des hydrocarbures chlorés et/ou des hydrocarbures d'eaux résiduaires, qui consiste à ajouter à l'eau résiduaire contenant des ions ammonium une lessive, de manière dosée en fonction de la teneur en ions ammonium, et à entraîner l'ammoniac qui se forme par un gaz d'entraînement et à le transformer avec un acide en sels d'ammonium, caractérisé en ce qu'il consiste, pour éliminer supplémentairement des hydrocarbures chlorés et/ou des hydrocarbures, à mettre le gaz d'entraînement en contact avec du charbon actif et/ou avec de l'argile poreuse.

2. Procédé suivant la revendication 1, caractérisé en ce qu'il consiste à utiliser de l'air comme gaz d'entraînement.

3. Installation pour éliminer des ions ammonium d'eaux résiduaires suivant la revendication 1, comprenant au moins deux colonnes de séparation par entraînement (3, 16, 36, 40), montées en série de façon que les conduits d'évacuation des gaz (13, 15, 39, 44) en tête des deux colonnes de séparation par entraînement communiquent avec les extrémités inférieures de l'autre colonne de séparation par entraînement, le conduit d'amenée (1, 30) de l'eau résiduaire chargée d'ions ammonium et de la lessive étant raccordé, en outre, à la tête de la première colonne de séparation par entraînement (3, 36), et le conduit d'évacuation (10, 52) de l'eau résiduaire chargée de sels étant raccordé à l'extrémité inférieure de cette première colonne de séparation par entraînement (3, 36), et le conduit d'amenée (20, 41) de l'acide étant, en outre, raccordé à la tête de la seconde colonne de séparation par entraînement (16, 40) et le conduit d'évacuation (23, 43) de l'acide en excès avec les sels d'ammonium étant raccordé à l'extrémité inférieure de la seconde colonne de séparation par entraînement (16, 40), caractérisé en ce qu'au conduit d'évacuation des gaz (44) de la deuxième colonne de séparation par entraînement (40) est raccordée une troisième colonne de séparation par entraînement (28), qui est raccordée, par son conduit d'évacuation des gaz (38) issu de la tête, à l'extrémité inférieure de la première colonne de séparation par entraînement (36), et porte en outre en tête un conduit d'amenée (45) d'une suspension aqueuse de charbon actif et/ou d'argile poreuse et, à l'extrémité inférieure, un conduit d'évacuation (46) de cette suspension.

4. Installation suivant la revendication 3, caractérisée en ce que la suspension soutirée à l'extrémité inférieure de la troisième colonne de séparation par entraînement (28) est renvoyée par pompage pour la plus grande partie en tête de la même colonne et n'est rejetée et remplacée par de la suspension fraîche que pour une petite partie.

5. Installation suivant la revendication 3, caractérisée en ce qu'un ventilateur (14, 37) est monté dans le conduit d'amenée du gaz d'entraînement menant à la première colonne de séparation par entraînement (3, 36).

6. Installation suivant la revendication 3, caractérisée en ce que la troisième colonne de séparation par entraînement est une colonne à corps de garnissage.

7. Installation suivant la revendication 3, caractérisée en ce que les deux premières colonnes sont des colonnes à plateaux en calotte.

8. Installation suivant la revendication 3, caractérisée en ce que toutes les colonnes (3, 16, 28, 36, 40) sont des colonnes à corps de garnissage.

9. Installation suivant la revendication 3, caractérisé en ce que le mélange de sel d'ammonium et d'acide soutiré à l'extrémité inférieure de la deuxième colonne de séparation par entraînement (16, 40) est renvoyé par pompage pour la plus grande partie, en tête de la même colonne, et n'est soutiré et remplacé par de l'acide frais que pour une petite partie.

10. Installation suivant la revendication 9, caractérisée en ce que, dans le conduit d'amenée (1, 30) de l'eau résiduaire chargée d'ions ammonium, débouche un conduit d'amenée de lessive (4, 32), muni d'une pompe doseuse (6, 33), et est incorporée une chambre de mélange (7, 35).

11. Installation suivant la revendication 10, caractérisée, en ce que la suspension, soutirée de l'extrémité inférieure de la troisième colonne de séparation

par entraînement (28), est renvoyée par pompage, pour la plus grande partie, en tête de la même colonne, et n'est rejetée et n'est remplacée par de la suspension fraîche que pour une petite partie.

12. Installation suivant la revendication 8 ou 10, caractérisée, en ce qu'un ventilateur (14, 37) est monté dans le conduit d'amenée du gaz d'entraînement menant à la première colonne de séparation par entraînement (3, 36).

13. Installation suivant la revendication 8, caractérisée, en ce que, dans le conduit d'amenée (1, 30), de l'eau résiduaire chargée d'ions ammonium débouche un conduit d'amenée de lessive (4, 32) muni d'une pompe doseuse (6, 33), et est incorporée une chambre de mélange (7, 35).

14. Installation suivant la revendication 8, caractérisée, en ce que les deux premières colonnes sont des colonnes à plateaux en calotte.

15. Installation suivant la revendication 10, caractérisée, en ce que la troisième colonne de séparation par entraînement est une colonne à corps de garnissage.

16. Installation suivant la revendication 8 ou 10, caractérisée, en ce que toutes les colonnes (3, 16, 28, 36, 40) sont des colonnes à corps de garnissage.

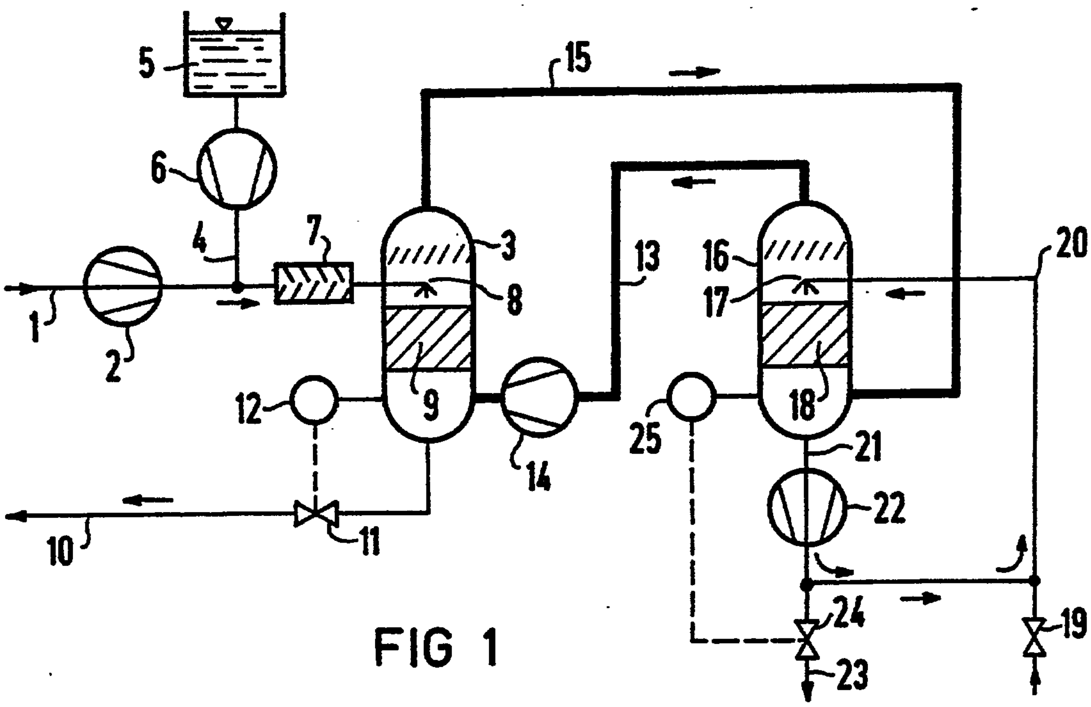
1
2
3
4
5
6
7
8
9
10
11
12
13
14
15
16
17
18
19
20
21
22
23
24
25

FIG 1

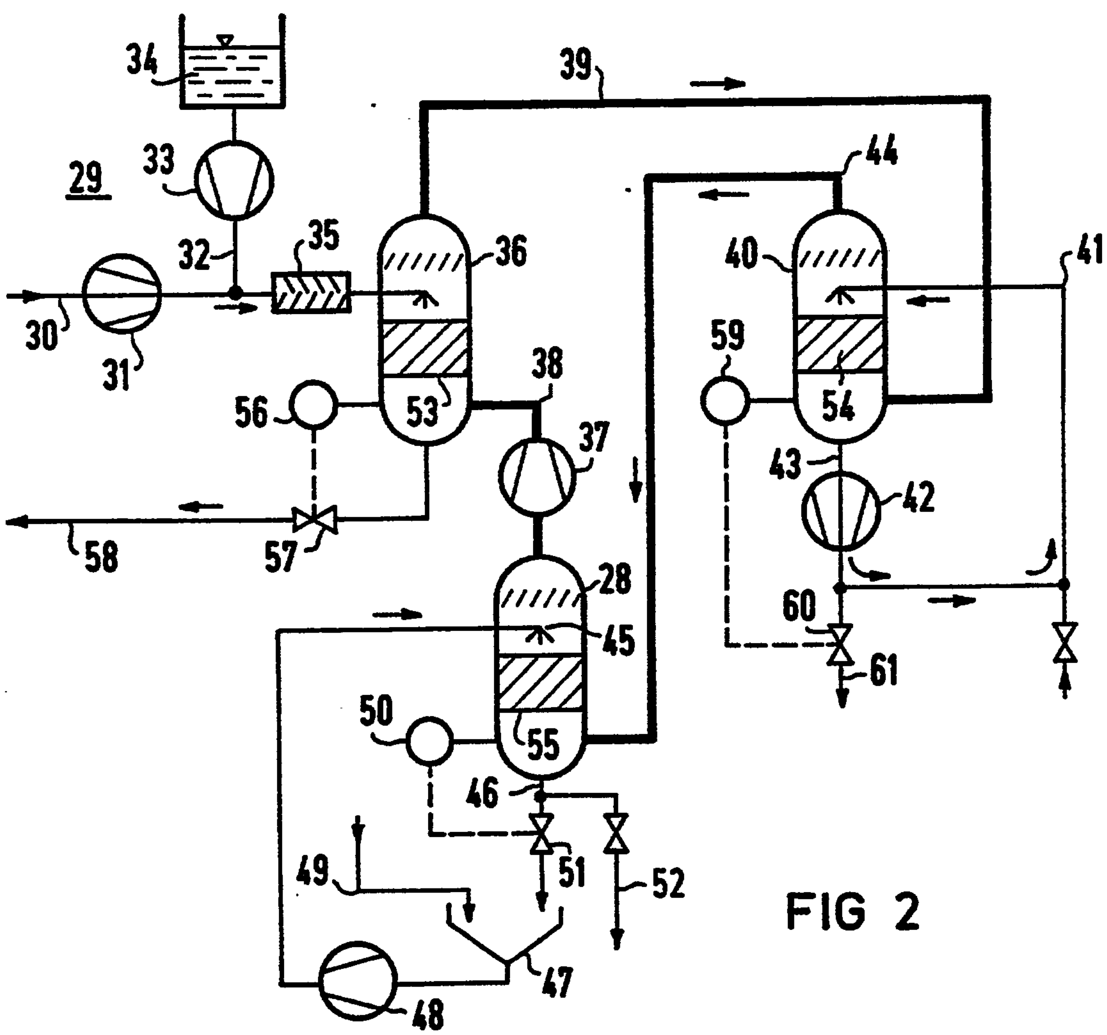
28
29
30
31
32
33
34
35
36
37
38
39
40
41
42
43
44
45
46
47
48
49
50
51
52
53
54
55
56
57
58
59
60
61

FIG 2